# EUROPÄISCHE PATENTSCHRIFT

(11) **EP 0 529 521 B1**
(45) Veröffentlichungstag und Bekanntmachung des Hinweises auf die Patenterteilung: **24.01.1996**
(21) Anmeldenummer: 92114257.6
(22) Anmeldetag: 20.08.1992
(51) Int. Cl.: F16H 37/12

(54) **Vorrichtung zum Umwandeln einer Rotations- in eine Translationsbewegung**
Device for converting a rotary motion into a translation motion
Dispositif de conversion d'un mouvement rotatif en mouvement translatif

(30) Priorität: 20.08.1991 DE 4127487
(43) Veröffentlichungstag der Anmeldung: 03.03.1993
(73) Patentinhaber: HARMONIC DRIVE ANTRIEBSTECHNIK GmbH, D-65555 Limburg (DE)
(72) Erfinder:
(74) Vertreter: Müller, Eckhard, Dr.

(56) Entgegenhaltungen:
- EP-A- 0 232 022
- EP-A- 0 258 522
- WO-A-84/02405
- FR-A- 2 042 805
- TECHNISCHE RUNDSCHAU Bd. 77, Nr. 19, Mai 1985, BERN CH Seiten 44 - 49 PETER EISENRING: 'Präzisionsgetriebe für hohe Drehmomente'

## Beschreibung

Die Erfindung bezieht sich auf eine Vorrichtung zum Umwandeln einer Rotations- in eine Translationsbewegung mit einem durch eine Antriebseinheit angetriebenen Untersetzungsgetriebe, welches auf ein mechanisches Übertragungselement mit einem linear bewegbarem Stellglied einwirkt.

Derartige Vorrichtungen werden bspw. zur Kompensation von Durchbiegungen schwerkraftabhängiger und/oder vorgespannter Bauteile eingesetzt, etwa bei Maschinen zur Papierherstellung im Bereich des Stoffauflaufs und der Streicheinheiten oder zur Schichtdicken-Einstellung von Beschichtungsmedien bei Kaschiermaschinen. Weitere Einsatzmöglichkeiten sind bei Kunststoff-Extrusionsmaschinen oder bei Furniermaschinen zur Einstellung der Messer.

Eine Vorrichtung zur Umwandlung einer Drehbewegung mit relativ kleinem Drehmoment in eine Längsbewegung mit relativ großer Zug- oder Druckkraft ist bereits aus der EP-A2 0 232 022 bekannt mit einem als Luftmotor, Hydraulikmotor oder Elektromotor ausgeführten Stellantrieb, welcher ein zweistufiges, spielfreies Spannungswellengetriebe antreibt. Die zweite Wellgetriebestufe dient zum Antrieb einer linear bewegbaren Spindel, mittels welcher die Streicheinheit einer Papiermaschine eingestellt werden soll.

Eine gattungsgemäße Vorrichtung zur Umwandlung einer Rotations- in eine Translationsbewegung ist auch aus der WO-A-84 02 405 bekannt mit einem Spannungswellengetriebe, wobei als Übertragungselement entweder ein Trapezgewindetrieb oder ein Kugel- bzw. Rollengewindetrieb eingesetzt wird.

Zur Umwandlung von Rotationsbewegungen mit niedrigem Drehmoment in Translationsbewegungen von hoher Zug- oder Druckkraft sind weiterhin Antriebe bestehend aus einem elektrischen Antriebsmotor mit nachgeschaltetem, auf eine Gewindespindel einwirkendem Schneckengetriebe sowie Systeme mit Elektromotor, Planetengetriebe und Gewindespindel bekannt. Die Positionierung der Übertragungselemente der vorbekannten Antriebseinheiten erfolgt im allgemeinen mittels Absolut-Rückmeldung der Spindelpositionen in einem geschlossenen Regelkreis, wobei nach Erreichen der gewünschten Position die Antriebe abgeschaltet bzw. stromlos geschaltet und die Regelkreise inaktiviert werden. Die Übertragungselemente müssen daher selbsthemmend ausgeführt sein, um die angefahrenen Positionen exakt zu halten, wobei mitunter Toleranzen von kleiner als 1 Mikrometer einzuhalten sind.

Gerade die unbefriedigende Positionierbarkeit und geringe Auflösung stellt einen wesentlichen Nachteil der bekannten Antriebe dar. So bedingen Reibungshysterese, mechanische Lose, Auffederungseffekte und Ruck-Gleit-Erscheinungen, sogenanntes Stick-Slip, ein ungünstiges Übertragungsverhalten, welches die Einhaltung von Positionierungen der Stellglieder im Mikrometerbereich nicht zuläßt. Desweiteren sind die bekannten Antriebe durch den Einsatz von Schneckengetrieben und/oder Gewindespindeln einem starken Verschleiß der Übertragungselemente unterworfen. Darüber hinaus müssen viele der bekannten Antriebe spielfrei eingestellt werden, was jedoch wiederum zu einem erhöhten mechanischen Verschleiß der Antriebsteile führt. Auch hat sich gezeigt, daß bei bestimmten Applikationen die Leistungsaufnahme der Antriebe aufgrund der damit einhergehenden Wärmeentwicklung zu groß ist. Ein wesentlicher Nachteil der bekannten Systeme ist auch die überaus ausgeprägte Hysteresestreuung, so daß eine Begrenzung der von den Spindeln ausgeübten Schubkraft allein mittels Leistungsbegrenzung der Antriebseinheit nicht möglich ist. Für bestimmte Applikationen sind daher bei den bekannten Systemen Überlastsicherungen, bspw. mechanische Überlastkupplungen wie bei dem aus der EP-A2 0 232 022 bekannten Antrieb, für die geregelten Maschinenteile und das Stellglied vorgesehen.

Davon ausgehend liegt der Erfindung die Aufgabe zugrunde, eine Vorrichtung der eingangs genannten Art dahingehend weiterzuentwickeln, daß bei kompaktem Aufbau, axial steifem und möglichst spielfreiem Antrieb, bei einer Minimierung von Hysterese und Reibungsverlusten eine optimale Positionierbarkeit des Stellgliedes erreicht ist und dabei die angefahrenen Positionen möglichst exakt gehalten werden.

Zur Lösung der Aufgabe ist es nach der Erfindung i. w. vorgesehen, daß ein bezüglich einem vom Übertragungselement ausgeübten rücktreibenden Drehmoment selbethenmend ausgelegtes koaxiales Untersetzungsgetriebe vorgesehen ist und das Übertragungselement nicht selbsthemmend ausgebildet ist.

Bei der erfindungsgemäßen Vorrichtung sind die an sich gegenläufigen Forderungen nach Hystereseminimierung einerseits und mechanischer Selbsthemmung des Systems andererseits in optimaler Weise miteinander in Einklang gebracht. Durch den Einsatz eines nicht selbsthemmenden, spielfreien mechanischen Übertragungselementes ist die Hysterese und damit auch die Systemreibung minimiert, wobei das Halten der angefahrenen Position des Stellgliedes durch die selbsthemmende Ausführung des koaxialen Untersetzungsgetriebes gewährleistet ist. Darüber hinaus besitzt der vorgeschlagene Antrieb gegenüber den bekannten Stellantrieben eine geringere Anzahl von Bauteilen, was sich in einer erhöhten Betriebssicherheit des Systems niederschlägt. Aufgrund der Auslegung des zwischengeschalteten Getriebes als selbsthemmendes koaxiales Untersetzungsgetriebe ergibt sich auch eine hohe axiale Steifigkeit des Gesamtantriebes.

Als koaxiale Untersetzungsgetriebe kommen bspw-Umlaufgetriebe, wie etwa Planetengetriebe oder Zykloid-Getriebe, in Betracht. Nach einer besonderen Ausführungsform der Erfindung ist es vorgesehen, daß das Untersetzungsgetriebe als Spannungswellengetriebe ausgebildet ist. Ein solches Spannungswellengetriebe, wie es bspw. auch in der WO-A-8 402 405 beschrieben ist, stellt ein spielfreies, hoch untersetzendes Getriebe der und zeichnet sich durch eine geringe Hysterese bei der Drehmomentübertragung aus, wodurch das Positionierverhalten des Antriebes nochmals verbessert ist. Darüber hinaus besitzt das Spannungswellengetriebe einen im vergleich zu anderen Umlaufgetrieben kompakten Aufbau, wie er insbesondere für den Einsatz des erfindungsgemäßen Stellantriebes bei Papierherstellungsmaschinen von besonderem Vorteil ist. Auch erweist sich die erfindungsgemäße Vorrichtung mit Spannungswellengetriebe als nahezu verschleißfrei und spielfrei, und zwar über Lebensdauern hinaus, wie sie von den bekannten Antrieben üblicherweise erreicht werden.

In einer weiteren Ausführungsform der Erfindung ist es vorgesehen, daß das Übertragungselement als Kugelgewindetrieb ausgebildet ist. Hierdurch steht ein nahezu spielfreier, reibungsarmer Gewindetrieb mit hoher Laufgenauigkeit und axialer Steifigkeit sowie geringer Hysterese zur Verfügung.

Alternativ kann das Übertragungselement auch als Rollengewindetrieb, vorzugsweise als Planeten-Rollengewindetrieb, ausgebildet sein.

Die Selbsthemmung des Untersetzungsgetriebes kann nach einer Ausführungsform der Erfindung dadurch realisiert werden, daß das Untersetzungsgetriebe bzw. das Spannungswellengetriebe nicht bzgl. der antriebsseitig anliegenden Drehmomentbelastungen ausgelegt ist, sondern bezogen auf eine vom Übertragungselement ausgeübte maximale Drehmomentbelastung überdimensioniert ist, so daß die angefahrene Position des Stellgliedes nach Abschalten, aber auch bei Ausfall der Antriebseinheit, gehalten wird mit einer Toleranz von kleiner als 1 Mikometer.

Als Bemessungsregel für die Selbsthemmung empfiehlt es sich nach der Erfindung, die Dimensionierung des Untersetzungsgetriebes dadurch festzulegen, daß bei maximaler axialer Zug- bzw. Druckbelastung auf das Stellglied das von dem Übertragungselement auf die Abtriebsseite des koaxialen Untersetzungsgetriebes bzw. des Spannungswellengetriebes ausgeübte Drehmoment wenigstens gleich, vorzugsweise kleiner als das rücktreibende Anlaufdrehmoment des koaxialen Untersetzungsgetriebes bzw. des Spannungewellengetriebes ist.

Als Einstellgröße für die Überdimensionierung ist es nach der Erfindung vorgesehen, daß das koaxiale Untersetzungsgetriebe bzw. das Spannungswellengetriebe bei einer abtriebsseitig anliegenden maximalen Drehmomentbelastung bezogen auf sein Nenndrehmoment bis etwa 80 %, vorzugsweise 20 bis 30 %, ausgelastet ist.

Hinsichtlich der Selbsthemmung des koaxialen Untersetzungsgetriebes bzw. des spannungawellengetriebes ist es selbstverständlich auch möglich, eine spezielle Fettschmierung oder weitere reibungserzeugende und/oder reibungsbehaftete Elemente einzusetzen, die an der Eingangsseite des Getriebes einwirken.

Aufgrund des optimalen Übertragungsverhaltens und der geringen Hysterese bzw. Hysteresestreuung über den gesamten Bereich des Arbeitshubes des Stellgliedes ist es bei dem erfindungsgemäßen System nunmehr auch möglich, daß die Axialkraft-Begrenzung des Stellgliedes allein durch die Leistungsaufnahme der Antriebseinheit einstellbar ist. Aufwendige mechanische Überlastkupplungen wie bei den vorbekannten Antrieben, welche grundsätzlich die Gefahr eines mechanischen Spiels des Stellelementes implizieren, können daher entfallen. Hierdurch ist auch ein hoher Bedienungskomfort erreicht, da die maximale Schubkraft, insbesondere im Falle einer elektrischen Antriebseinheit, elektrisch eingestellt werden kann.

Nach einer weiteren Ausgestaltung der Erfindung kann die Abtriebsseite des koaxialen Untersetzungsgetriebes bzw. des Spannungswellengetriebes in konstruktiv einfacher Weise spielfrei, vorzugsweise mittels Schraubverbindungen, mit dem Übertragungselement verbunden sein. Auch insoweit können aufwendige Überlastsicherungen wie bei den bekannten Stellantrieben zur Vermeidung von Beschädigungen an Getriebe und den damit zusammenwirkenden Anbauteilen entfallen.

Aus Sicherheitsgründen kann es sich bei bestinmten Applikationen empfehlen, auf die Eingangswelle des koaxialen Untersetzungsgetriebes bzw. des Spannungswellengetriebes eine mechanische und/oder elektromechanische Bremse einwirken zu lassen.

Nach einer besonderen Ausführungsform der Erfindung können als Geradführungsmittel für das Stellglied Längsnuten vorgesehen sein, in welche am Gehäuse abgestützte Roll- oder Kugelkörper, vorzugsweise spielfrei, eingreifen, wodurch neben der Verdrehsicherung des Stellgliedes zusätzlich eine Reibungs- und Verschleißoptimierung erreicht wird.

Für eine besonders kompakte Ausführungsform empfiehlt es sich nach der Erfindung, daß zumindest die Längsachsen von Untersetzungsgetriebe bzw. Spannungswellengetriebe und Stellglied koaxial zueinander angeordnet sind.

Schließlich liegt es auch im Rahmen der Erfindung, die Längsachsen von Antriebseinheit, Untersetzungsgetriebe bzw. Spannungswellengetriebe und Stellglied koaxial zueinander anzuordnen mit einer sich in Längsrichtung erstreckebden Durchführung für das Abtastelement eines Weg-Meßsystems des Stellgliedes. Durch die Anordung und Führung des Weg-Meßsystems in einem sich durch den Gesamt-Antrieb erstreckenden Längskanal werden Meßwertverfälschungen wie bei den bekannten Stellantrieben mit zusätzlichen Umlenkhebeln zur Weiterleitung der Meßinformhtion vermieden. Gleichzeitig ist hierdurch ein äußerst kompakter Aufbau erreicht, wobei das Tastelement der Meßeinrichtung nach außen gegen Beschädigungen oder aggressive Umwelteinflüsse zusätzlich geschützt ist. Die einzelnen Durchführungen für das Tastelement lassen sich in konstruktiv besonders vorteilhafter Weise dadurch realisieren, daß die Welle der Antriebseinheit, die Ein- und Ausgangs- bzw. die Abtriebswelle des Untersetzungsgetriebes und das Stellglied selbst als Hohlwellen ausgeführt sind.

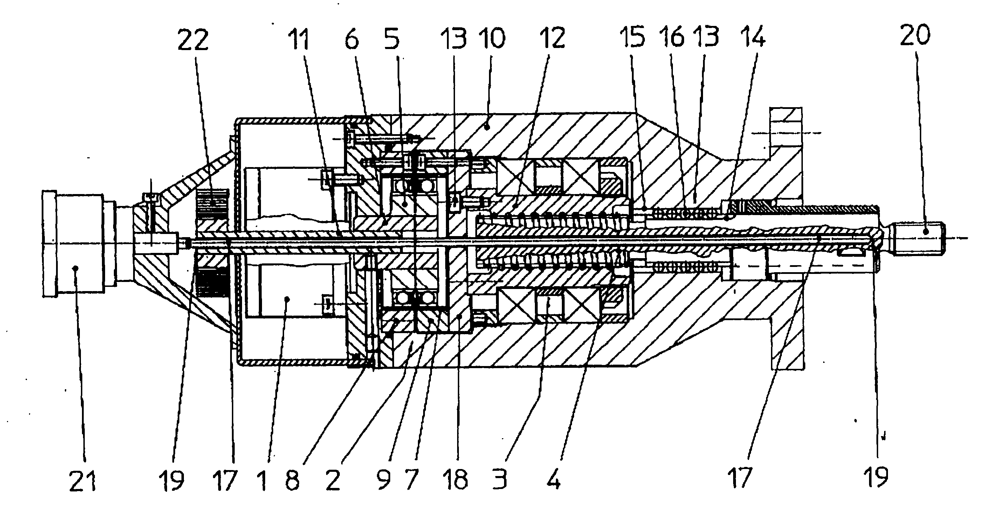

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer zusenmenfassung in den Ansprüchen oder deren Rückbeziehung.

Die einzige Figur zeigt eine mögliche Ausführungsform einer erfindungsgemäßen Vorrichtung, wie sie bspw. bei Prozeßregelungen in Papierhemtellungsmaschinen, insbesondere im Bereich des Stoffauflaufes oder der Streicheinheit eingesetzt werden können.

Der Stellantrieb weist eine Antriebseinheit 1 auf, welche ein koaxiales Untersetzungsgetriebe in Form eines Spannungswellengetriebes 2 antreibt, das seinerseits auf ein mechanisches Übertragungselement 3 mit axial bewegbarem Stellglied 4 einwirkt. Am freien Ende des Stellgliedes 4 befindet sich ein Anschlußzapfen 20, an welchem das jeweilige Anbauteil gehalten ist und entsprechend der Vorschubbewegung des Stellgliedes 4 bewegt werden kann.

Die Antriebseinheit 1 ist bei dem hier gewählten Ausführungsbeispiel als Elektromotor ausgebildet. Seine Motorwelle 11 ist an die Eingangswelle 6 des Spannungswellengetriebes 2 angekugpelt. Das Spannungswellengetriebe 2 besteht antriebsseitig aus einem sogenannten Wellengenerator 5, welcher die Form einer Ellipse aufweist und bei einer Drehung der Eingangswelle 6 wellenförmige Bewegungen auf eine außenverzahnte Stahlbuchse 7, den sogenannten Flexible Spline, überträgt. Die außenverzahnte Stahlbuchse 7, welche während des Betriebes ständigen Verformungen unterworfen ist, wälzt sich an den Innenverzahnungen zweier Außeringe 8, 9 ab. Der eingangsseitig angeordnete Außenring 8, welcher auch als Circular Spline bezeichnet wird, hat eine geringfügig größere Zähnezahl als die Stahlbuchse 7 und ist drehfest am Gehäuse 10 gehalten, während der ausgangs- bzw. abtriebsseitige Außenring 9, welcher als Dynamic Spline bezeichnet wird, die gleiche Zähnezahl wie die außenverzahnte Stahlbuchse 7 aufweist. Bei Drehung des Wellgenerators 5 ergeben sich aufgrund der geringen Zähnezahldifferenz von Stahlbuchse 7 und Außenring 8 hohe Untersetzungsverhältnisse.

Wie weiterhin aus der Figur zu ersehen, ist das mechanische Übertragungselement 3 als Kugelgewindetrieb ausgebildet mit einer Gewindespindel als Stellglied 4 und einer Kugelgewindemutter 12, welche spielfrei mittels Schraubverbindungen 13 über einen Abtriebsflansch 18 mit dem Außenring 9 des spannungswellengetriebes 2 verbunden ist. Bei eingeschalteter Antriebseinheit 1 wird somit eine Rotationsbewegung mit relativ kleinem Drehmoment über das Spannungswellengetriebe 2 in eine Translationsbewegung der Gewindespindel 4 mit relativ großer Zug- oder Druckkraft übertragen.

Das Spannungswellengetriebe 2 ist bzgl. einer von dem mechanischen Übertragungselement 3 ausgehenden maximalen Drehmomentbelastung überdimensioniert. Durch diese Überdimensionierung wird verhindert, daß eine maximale axiale Lastbeaufschlagung der Gewindespindel 4 zu einer Drehwinkeländerung des Spannungswellengetriebes 2 führt.

Das Spannungewellengetriebe 2 wirkt daher bezüglich abtriebsseitiger Drehmomentbelastungen selbsthemmend. Hierdurch ist gewährleistet, daß bei Erreichen der gewünschten Positionen der Gewindespindel 4 und Abschalten der Antriebseinheit 1 die jeweils angefahrene Position der Gewindespindel 4 exakt gehalten wird, wobei Toleranzen von weniger als 1 Mikrometer erreichbar sind.

Durch die Ausführung des Spannungswellengetriebes 2 als selbsthemmendes Untersetzungsgetriebe und den Einsatz eines nicht selbsthemmenden mechanischen Übertragungselementes in Form eines Kugelgewindetriebes 3 ergibt sich eine Minimierung der System-Hysterese bei optimalen Positionierverhalten.

Eine Auslegung des Getriebes kann bspw. dadurch erfolgen, daß das bei maximaler axialer Zug- bzw. Druckbelastung der Gewindespindel 4 von dem mechanischen Übertragungselement 3 auf die Abtriebsseite des Spannungswellengetriebes 2 ausgeübte Drehmoment niedriger ist als das rücktreibende Anlaufdrehmoment des Spannungswellengetriebes 2, wobei zusätzlich noch ein Sicherheitsfaktor berücksichtigt werden sollte. So kann die Selbsthmmung des Spannungswellengetriebes 2 dadurch erreicht werden, daß es bezogen auf sein Nenndrehmoment bei einer abtriebsseitig anliegenden maximalen Drehmomentbelastung nur bis etwa 20 % ausgelastet ist.

Aufgrund der geringen Hysterese bzw. Hysteresestreuung und des optimalen Übertragungsverhaltens des Stellantriebes ist es auch möglich, daß die Axialkraft-Begrenzung der Gewindespindel 4 allein durch die Leistungsaufnahme der Antriebseinheit 1 bzw. des Elektromotores eingestellt wird.

Für eine Verdrehsicherung der Gewindespindel 4 sind Geradführungsmittel vorgesehen mit in die Gewindespindel 4 eingearbeitete Längsnuten 14, in welche in Korrespondierenden Längsnuten 15 des Gehäuses 10 abgestützte kugelkörper 16 spielfrei eingreifen.

Wie aus der Figur weiterhin ersichtlich, sind die Motorwelle 11 der Antriebseinheit 1, die Eingangswelle 6 und die Ausgangswelle bzw. der Abtriebsflansch 18 des Spannungswellengetriebes 2 und ebenso die Gewindespindel 4 auf einer gemeinsamen Längsachse des Systems angeordnet, wobei diese einzelnen Bauteile jeweils als Hohlwellen ausgebildet sind und eine sich in Längsrichtung erstreckende Durchführung 19 für ein Tastelement 17 eines Weg-Meßsystems definieren. Das Weg-Meßsystem dient zur Bestimmng der jeweiligen Position des Stellgliedes 4 und kann mit einem (nicht dargestellten) elektrischen Signalgeber, bspw. einem induktiven Absolutgeber, auogerüstet sein, dessen Ausgangssignale einer Regelung zur Einstellung der Gewindespindel 4 oder einem Prozeßleitsystem zugeführt werden. Zusätzlich weist das Weg-Meßsystem bei der hier gezeigten Ausführungsform ein mechanisches Anzeigegerat in Form einer Meßuhr 21 auf, welche zur Kontrolle der elektrisch gemessenen Daten, aber auch als Redundanzeinrichtung für eine manuelle Einstellung der Gewindespindel 4 dient, sowie ein Handrad 22, mittels welchem eine Justierung bzw. ein Nullabgleich von elektrischem und mechanischem Signalgeber vorgenommen werden kann.

### Bezugszeichenliste

1- Antriebseinheit, Elektromotor
2 - Spannungswellengetriebe
3 - Übertragungselement, Kugelgewindetrieb
4 - Stellglied, Gewindespindel
5 - Wellengenerator
6 - Eingangswelle
7- Stahlbuchse
8 - Außenring
9 - Außenring
10 - Gehäuse
11 - Motorwelle
12 - Kugelgewindemutter
13- Schraubverbindung
14 - Längsnut
15 - Längsnut
16 - Kugelkörper
17 - Abtastelement
18- Abtriebsflansch
19 - Durchführung
20 - Anschlußzapfen
21 - Meßuhr
22 - Handrad

## Patentansprüche

1. Vorrichtung zum Umwandeln einer Rotations- in eine Translationsbewegung mit einem durch eine Antriebseinheit (1) angetriebenen Untersetzungsgetriebe (2), welches auf ein mechanisches Übertragungselement (3) mit linear bewegbarem Stellglied (4) einwirkt und mit diesem koaxial ist, dadurch gekennzeichnet, daß das Untersetzungsgetriebe (2) ein bezüglich einem vom Übertragungeelement (3) ausgeübten rücktreibenden Drehmoment selbsthemmend ausgelegt ist und das Übertragungselement (3) nicht selbsthemmend ausgebildet ist.

2. Vorrichtung nach Anspruch 1, dadurch gekennzeichnet, daß das Untersetzungsgetriebe (2) als Spannungswellengetriebe (2) ausgebildet ist.

3. Vorrichtung nach Anspruch 1 oder 2, dadurch gekennzeichnet, daß das Übertragungselement (3) als Kugelgewindetrieb ausgebildet ist.

4. Vorrichtung nach Anspruch 1 oder 2, dadurch gekennzeichnet, daß das Übertragungselement (3) als Rollengewindetrieb, vorzugsweise als Planeten-Rollengewindetrieb, ausgebildet ist.

5. Vorrichtung nach einem der Ansprüche 1 bis 4, dadurch gekennzeichnet, daß das koaxiale Untersetzungsgetriebe bzw. das Spannungswellengetriebe (2) bezogen auf eine vom Übertragungselement (3) ausgeübte maximale Drehmomentbelastung überdimensioniert ist.

6. Vorrichtung nach einem der Ansprüche 1 bis 5, dadurch gekennzeichnet, daß die Dimensionierung des koaxialen Untersetzungsgetriebes bzw. des Spannungswellengetriebes (2) dadurch bestimmt ist, daß bei maximaler arialer Zug- bzw. Druckbelastung auf das Stellglied (4) das von dem Übertragungselement (3) auf die Abtriebsseite des koaxialen Untersetzungsgetriebes bzw. des Spannungswellengetriebes (2) ausgeübte Drehmoment wenigstens gleich, vorzugsweise kleiner als das rücktreibende Anlaufdrebmoment des koaxialen untersetzungsgetriebes bzw. des Spannungswellengetriebes (2) ist.

7. Vorrichtung nach einem der Ansprüche 1 bis 6, dadurch gekennzeichnet, daß das koaxiale Untersetzungsgetriebe bzw. das Spannungewellengetriebe (2) bei einer abtriebsseitig anliegenden maximalen Drehmomentbelastung bezogen auf sein Nenndrebmoment bis etwa 80 %, vorzugsweise 20 bis 30 %, ausgelastet ist.

8. Vorrichtung nach einem der Ansprüche 1 bis 7, dadurch gekennzeichnet, daß die Selbsthemmung des koaxialen Untersetzungsgetriebes bzw. des Spannungswellengetriebes (2) durch eine spezielle Fettschmierung oder weitere reibungserzeugende und/oder reibungsbehaftete Elemente erzeugt wird, die an der Eingangsseite des Getriebes einwirken.

9. Vorrichtung nach einem der Ansprüche 1 bis 8, dadurch gekennzeichnet, daß die Abtriebsseite des koaxialen Untersetzungsgetriebes bzw. des Spannungswellengetriebes (2) spielfrei, vorzugsweise mittels Schraubverbindungen (13), mit dem übertragungselement (3) verbunden ist.

10. Vorrichtung nach eidem der Ansprüche 1 bis 9, dadurch gekennzeichnet, daß die Axialkraft-Begrenzung des Stellgliedes (4) durch die Leistungsaufnahme der Antriebseinheit (1) einstellbar ist.

11. Vorrichtung nach einem der Ansprüche 1 bis 10, dadurch gekennzeicbnet, daß auf die Eingangswelle (6) des koaxialen Untersetzungsgetriebes bzw. des Spannungswellengetriebes (2) eine mechanische und/oder elektromechanische Bremse einwirkt.

12. Vorrichtung nach einem der Ansprüche 1 bis 11, dadurch gekennzeichnet, daß als Geradführungsmittel für das Stellglied (4) Längsnuten (14, 15) vorgesehen sind, in welche am Gehäuse (10) abgestützte Roll- oder Kugelkörper (16), vorzugsweise spielfrei, eingreifen.

13. Vorrichtung nach einem der Ansprüche 1 bis 12, dadurch gekennzeichnet, daß zumindest die Längsachsen von koaxialem Untersetzungsgetriebe bzw. Spannungswellengetriebe (2) und Stellglied (4) koaxial zueinander angeordnet sind.

14. Vorrichtung nach einem der vorhergehenden Ansprücbe, dadurch gekennzeichnet, daß die Längsachsen von Antriebseinheit (1), koaxialem Untersetzungsgetriebe bzw. Spannungswellengetriebe (2) und Stellglied (4) koaxial zueinander angeordnet sind mit einer sich in Längsrichtung erstreckenden Durchführung (19) für das Abtastelement (17) eines Weg-Meßsystems für das Stellglied (4).

## Claims

1. Device for converting a rotational movement into a translational movement with a reduction gear (2), which is driven by a drive unit (1) and acts on a mechanical transmission element (3) with linearly movable setting member (4) and is co-axial therewith, characterised thereby, that the reduction gear (2) is designed to be self-locking in respect of a reverse torque exerted by the transmission element (3) and the transmission element (3) is constructed not to be self-locking.

2. Device according to claim 1, characterised thereby, that the reduction gear (2) is constructed as tension shaft gear (2).

3. Device according to claim 1 or 2, characterised thereby, that the transmission element (3) is constructed as circulating ball gear.

4. Device according to claim 1 or 2, characterised thereby, that the transmission element (3) is constructed as circulating roller gear, preferably as planetary circulating roller gear.

5. Device according to one of the claims 1 to 4, charactersied thereby, that the co-axial reduction gear or the tension shaft gear (2) is overdimensioned with reference to a maximum torque loading exerted by the transmission element (3).

6. Device according to one of the claims 1 to 5, characterised thereby, that the dimensioning of the co-axial reduction gear or the tension shaft gear (2) is determined by the torque, which is exerted on the drive output side of the co-axial reduction gear or the tension shaft gear (2) by the transmission element (3) in the case of maximum axial tension or compression loading on the setting member (4), being at most equal to and preferably less than the reverse starting torque of the co-axial reduction gear or the tension shaft gear (2).

7. Device according to one of the claims 1 to 6, characterised thereby, that the co-axial reduction gear or the tension shaft gear (2) is loaded to about 80%, preferably 20 to 30%, of its nominal torque in the case of a maximum torque loading being present at the drive output side.

8. Device according to one of the claims 1 to 7, characterised thereby, that the self-locking of the co-axial reduction gear or the tension shaft gear (2) is produced by a special grease lubrication or further friction-producing and/or friction-loaded elements which act at the intput side of the gear.

9. Device according to one of the claims 1 to 8, characterised thereby, that the drive output side of the co-axial reduction gear or the tension shaft gear (2) is connected free of play, preferably by maens of screw connections (13) with the transmission element (3).

10. Device according to one of the claims 1 to 9, characterised thereby, that the axial force limitation of the setting member (4) is settable by the power consumption of the drive unit (1).

11. Device according to one of the claims 1 to 10, characterised thereby, that a mechanical and/or electromechanical brake acts on the input shaft (6) of the co-axial reduction gear or the tension shaft gear (2).

12. Device according to one of the claims 1 to 11, characterised thereby, that longitudinal grooves (14, 15), into which roller or ball bodies (16), which bear against the housing (10), engage preferably free of play, are provided as rectilinear guide means for the setting member (4).

13. Device according to one of the claims 1 to 12, characterised thereby, that at least the longitudinal axes of the co-axial reduction gear or the tension shaft gear (2) and the setting member (4) are arranged one co-axially with the other.

14. Device according to one of the preceding claims, characterised thereby, that the longitudinal axes of the drive unit (1), the co-axial reduction gear or the tension shaft gear (2) and the setting member (4) are arranged one co-axially with the other with a passage (19), which extends in longitudinal direction, for the feeler element (17) of a travel measuring system for the setting member (4).

## Revendications

1. Dispositif pour transformer un mouvement de rotation en un mouvement de translation, comprenant un mécanisme réducteur (2) entraîné par une unité d'entraînement (1) et qui agit sur un élément de transmission mécanique (3) comportant un actionneur (4) mobile en mouvement linéaire, et qui est coaxial à celui-ci, caractérisé en ce que le mécanisme réducteur (12) est de construction autobloquante par rapport à un couple rétrograde exercé par l'élément de transmission (3) et en ce que l'élément de transmission n'est pas autobloquant.

2. Dispositif selon la revendication 1, caractérisé en ce que le mécanisme réducteur (2) est constitué par un mécanisme à ondes de tension.

3. Dispositif selon la revendication 1 ou 2, caractérisé en ce que l'élément de transmission (3) est constitué par un mécanisme à vis à billes.

4. Dispositif selon la revendication 1 ou 2, caractérisé en ce que l'élément de transmission (3) est constitué par un entraînement à vis à rouleaux, de préférence un entraînement à vis à rouleaux planétaires.

5. Dispositif selon une des revendications 1 à 4, caractérisé en ce que le mécanisme réducteur coaxial ou le mécanisme (2) à ondes de tension est surdimensionné relativement à une charge de couple maximum exercée par l'élément de transmission (3).

6. Dispositif selon une des revendications 1 à 5, caractérisé en ce que le dimensionnement du mécanisme réducteur coaxial ou du mécanisme (2) à ondes de tension est calculé de façon que, dans le cas d'une charge axiale maximale, de tension ou de compression, exercée sur l'actionneur (4), le couple exercé par l'élément de transmission (3) sur le côté de sortie du mécanisme réducteur coaxiale ou du mécanisme (2) à ondes de tension est au moins égal, de préférence inférieur au couple de démarrage rétrograde du mécanisme réducteur coaxial ou du mécanisme à ondes de tension (2).

7. Dispositif selon une des revendications 1 à 6, caractérisé en ce que le mécanisme réducteur coaxial ou le mécanisme à ondes de tension (2) est déchargé de jusqu'à environ 80 %, de préférence de 20 à 30 % par rapport à son couple nominal en cas d'une charge de couple maximum appliquée côté sortie.

8. Dispositif selon une des revendications 1 à 7, caractérisé en ce que l'autoblocage du mécanisme réducteur coaxial ou du mécanisme à ondes de tension (2) est produit par une lubrification spéciale ou par d'autres éléments produisant un frottement et/ou affectés par un frottement, qui agissent sur le côté d'entrée du mécanisme.

9. Dispositif selon une des revendications 1 à 8, caractérisé en ce que le côté de sortie du mécanisme réducteur coaxial ou du mécanisme à ondes de tension (2) est relié sans jeu à l'élément de transmission, de préférence au moyen d'assemblages à vis (13).

10. Dispositif selon une des revendications 1 à 9, caractérisé en ce que la limitation de la force axiale de l'actionneur (4) peut être réglée par la puissance absorbée de l'unité d'entraînement (1).

11. Dispositif selon une des revendications 1 à 10, caractérisé en ce qu'un frein mécanique et/ou électromécanique agit sur l'arbre d'entrée (6) du mécanisme réducteur coaxial ou du mécanisme à ondes de tension (2).

12. Dispositif selon une des revendications 1 à 11, caractérisé en ce qu'il est prévu comme moyens de guidage en ligne droite pour l'actionneur (4), des rainures longitudinales (14, 15) dans lesquelles sont engagés, de préférence sans jeu, des rouleaux ou billes (16) qui prennent appui sur le carter (10).

13. Dispositif selon une des revendications 1 à 12, caractérisé en ce qu'au moins l'axe longitudinal du mécanisme réducteur coaxial ou du mécanisme à ondes de tension (2) et de l'actionneur (4) sont agencés coaxialement l'un à l'autre.

14. Dispositif selon une des revendications précédentes, caractérisé en ce que les axes longitudinaux de l'unité d'entraînement (1), du mécanisme réducteur coaxial ou mécanisme à ondes de tension (2) et de l'actionneur (4) sont disposés coaxialement entre eux et coaxialement à un passage traversant (19) s'étendant dans la direction longitudinale, destiné à recevoir l'élément palpeur (17) d'un système de mesure de la course de l'actionneur (4).
